# EUROPEAN PATENT APPLICATION

(11) **EP 4 353 602 A1**
(43) Date of publication of application: **17.04.2024**
(21) Application number: 23203078.3
(22) Date of filing: 11.10.2023
(51) Int. Cl.: B64G 1/60, D06F 13/04, D06F 17/00, D06F 37/30, D06F 27/00

(54) **LAUNDRY SYSTEMS**

(30) Priority: 11.10.2022 US 202217963950
(71) Applicant: Hamilton Sundstrand Corporation, Charlotte, NC 28217-4578 (US)
(72) Inventor: MESA, Jorge Ramon, League City, 77573 (US); MACARIE, Luca, Naperville, IL, 60564 (US); DOSCHER, Daniel, Houston, TX, 77058 (US); PHONG, Kellie, Houston, TX, 77058 (US); EKRE, Bjorner, League City, TX, 77573 (US); MORRISON, Terrell L., League City, TX, 77573 (US); LOUVIER, Dewey, Pearland, TX, 77584 (US); GUINN, John, League City, TX, 77573 (US)
(74) Representative: Dehns

(57) **Abstract**

A laundry system can include an input shaft (101), an output actuator (103), and a motion converter (105) connected between the input shaft and the output actuator. The motion converter can be configured to convert rotational motion of the input shaft to linear motion of the output actuator. The system can include a laundry agitation arrangement (107) connected to the output actuator to be linearly actuated by the output actuator to agitate laundry.

## Description

### FIELD

This disclosure relates to laundry systems.

### BACKGROUND

Astronauts exercise for about two hours every day, but there are no laundry capabilities up in space yet. About 2 to 4 lbs. (e.g., 20-40%) of the trash created every day on the international space station (ISS) is fabric based that can be rewashed and reused. It costs about $2000/lb to send something to the ISS, and is about ten times that or more to send something to the Moon, Mars, and beyond. Also, on long range missions, the resupply time can be about 1 to 2 years. About 160 pounds of clothing per crew member per year are launched to ISS currently.

Such conventional methods and systems have generally been considered satisfactory for their intended purpose. However, there is still a need in the art for improvements. The present disclosure provides a solution for this need.

### SUMMARY

A laundry system can include an input shaft, an output actuator, and a motion converter connected between the input shaft and the output actuator. The motion converter can be configured to convert rotational motion of the input shaft to linear motion of the output actuator. The system can include a laundry agitation arrangement connected to the output actuator to be linearly actuated by the output actuator to agitate laundry.

The system can further include an exercise machine coupling connected to or forming part of the input shaft to couple the input shaft to an exercise machine to be rotated by the exercise machine. In certain embodiments, the system can include the exercise machine. In certain embodiments, the exercise machine can be a space station exercise machine.

In certain embodiments, the laundry agitation arrangement can include a linear slide, and an agitation chamber operatively connected to the linear slide to be constrained to sliding motion, the agitation chamber configured to receive and retain an item to be agitated. In certain embodiments, the motion converter includes an inline slider crank mechanism.

For example, in certain embodiments, the motion converter system can include a first bar fixed to the input shaft to rotate with the input shaft. The output actuator can be pinned to the first bar at a first end and pinned to the agitation chamber at a second end such that rotation of the first bar causes linear motion of the agitation chamber on the linear slide.

The motion converter system can include a belt drive connected to or forming part of the input shaft such that the input shaft is configured to be belt driven. The system can include an anchor configured to be fixed to a floor (or other suitable surface) and to allow the input shaft to rotate therein.

In accordance with at least one aspect of this disclosure, a laundry system for a spacecraft can be or include any suitable embodiment of a laundry system disclosed herein, e.g., as described above. A spacecraft can include an exercise machine, for example, and the laundry system can be connected to the exercise machine to be driven by the exercise machine.

In accordance with at least one aspect of this disclosure, a method can include using a spacecraft exercise machine to manually power a spacecraft laundry system. In certain embodiments, using the spacecraft exercise machine can include converting rotational motion from the exercise machine into linear motion, and linearly actuating an agitator. In certain embodiments, the method can include adding water and an item of clothing to the linear agitator (e.g., in a bag or directly into a chamber of the agitator). In certain embodiments, the method can include removing the item of clothing from the linear agitator after agitation. The method can include any other suitable method(s) and/or portion(s) thereof.

These and other features of the embodiments of the subject disclosure will become more readily apparent to those skilled in the art from the following detailed description taken in conjunction with the drawings.

### BRIEF DESCRIPTION OF THE DRAWINGS

So that those skilled in the art to which the subject disclosure appertains will readily understand how to make and use the devices and methods of the subject disclosure without undue experimentation, embodiments thereof will be described in detail herein below with reference to certain figures, wherein:
Fig. 1 is a side elevation view of an embodiment of a laundry system in accordance with this disclosure;
Fig. 2 is a perspective view of the embodiment of Fig. 1;
Fig, 3 is a side elevation view of the embodiment of Fig. 1, shown attached to one or more motive sources and having the agitation chamber connected to a drying system;
Fig. 4 is a schematic plan view of the embodiment of Fig. 1, shown attached to a treadmill exercise machine;
Fig. 5 is a schematic plan view of the embodiment of Fig. 1, shown attached to a rowing exercise machine;
Fig. 6 is a schematic plan view of the embodiment of Fig. 1, shown attached to a cycle exercise machine and mounted to a floor;
Fig. 7 is a schematic diagram of an embodiment of a rotational agitation chamber in accordance with this disclosure;
Fig. 8A is a schematic diagram of an embodiment of a rotational agitation chamber in accordance with this disclosure;
Fig. 8B is a cross-sectional view of the embodiment of Fig. 8A; and
Figs. 9A, 9B, and 9C show experimental results using the embodiment of Fig. 1, wherein Fig. 9A shows a shirt stained with 5 ml of coffee, Fig. 9B shows the results of a baseline test wash using a centrifuge with 500 ml water and 15 ml of detergent, and Fig. 9C shows the results of a test using the embodiment of Fig. 1 with 500 ml water and 15 ml detergent, wherein both operations lasted 10 minutes.

### DETAILED DESCRIPTION

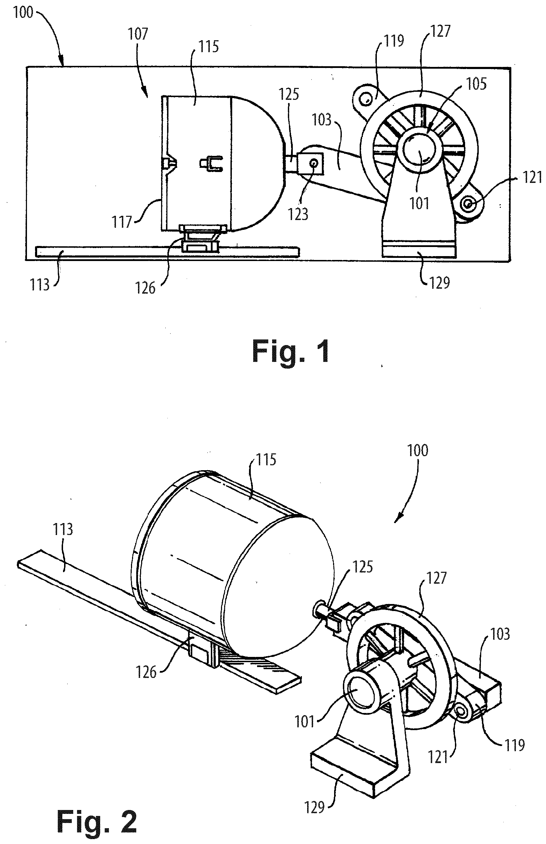

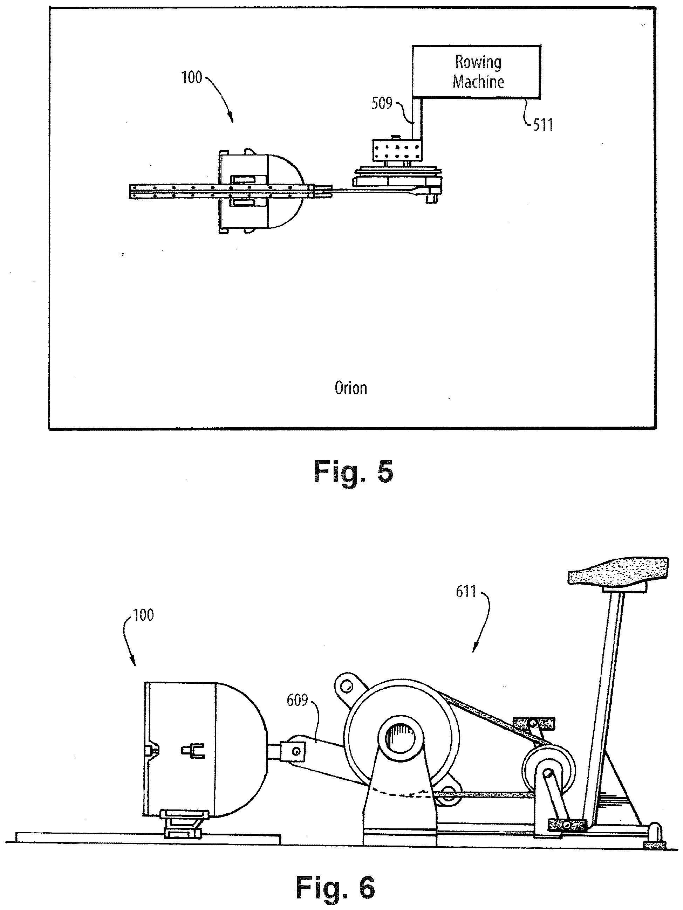

Reference will now be made to the drawings wherein like reference numerals identify similar structural features or aspects of the subject disclosure. For purposes of explanation and illustration, and not limitation, an illustrative view of an embodiment of a laundry system in accordance with the disclosure is shown in Fig. 1 and is designated generally by reference character 100. Other embodiments and/or aspects of this disclosure are shown in Figs. 2-9C. Certain embodiments described herein can be used to provide laundry capabilities to isolated missions (e.g., on spacecraft and/or planetary habitats).

Referring to Figs. 1-3, a laundry system 100 can include an input shaft 101, an output actuator 103, and a motion converter 105 connected between the input shaft 101 and the output actuator 103. The motion converter 105 can be configured to convert rotational motion of the input shaft 101 to linear motion of the output actuator 103. The system 100 can include a laundry agitation arrangement 107 connected to the output actuator 103 to be linearly actuated by the output actuator 103 to agitate laundry, for example.

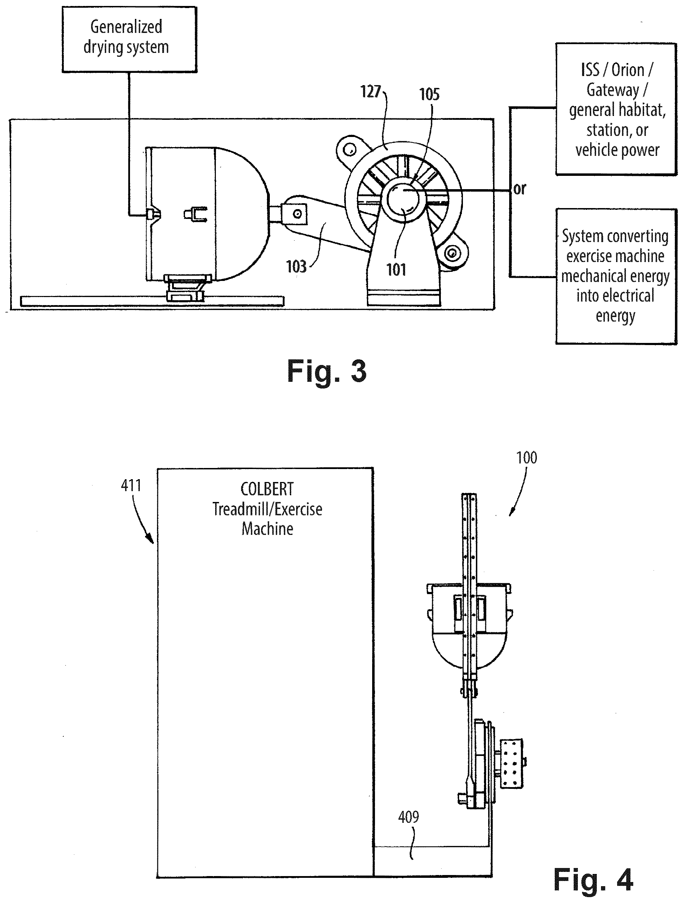

Referring additionally to Figs. 4, 5, and 6, the system 100 can further include an exercise machine coupling 409, 509, 609 (e.g., a shaft adapter and/or any other suitable connection to connect to an exercise machine) connected to or forming part of the input shaft 101 to couple the input shaft 101 to an exercise machine 411, 511, 611 to be rotated by the exercise machine 411, 511, 611. In certain embodiments, the system 100 can include the exercise machine 411, 511, 611. In certain embodiments, the exercise machine 411, 511, 611 can be a space station exercise machine (e.g., for use in space). The exercise machine 411, 511, 611 can be configured for any suitable spacecraft, planetary habitat, or other suitable isolated mission, for example.

In certain embodiments, the laundry agitation arrangement 107 can include a linear slide 113, and an agitation chamber 115 operatively connected to the linear slide 113 to be constrained to sliding motion. The agitation chamber 115 can be configured to receive and retain an item to be agitated (e.g., an article of clothing). In certain embodiments, the agitation chamber 115 can include a door 117 that is configured to be opened to access the interior volume of the agitation chamber 115. The door 117 can be latched and hinged, and/or otherwise removably or moveably connected to a base portion of the agitation chamber 115. In certain embodiments, the agitation chamber 115 can be liquid sealed such that the agitation chamber 115 can contain water and detergent. In certain embodiments, an article of clothing can be placed within a sealed bag with water and detergent, and the sealed bag can be placed within the agitation chamber 115.

In certain embodiments, the motion converter 105 includes an inline slider crank mechanism (e.g., a two bar mechanism as shown). For example, in certain embodiments, the motion converter system 105 can include a first bar 119 fixed to the input shaft 101 to rotate with the input shaft 101. The output actuator 103 can be pinned to the first bar 119 at a first end (e.g., at pin 121) and pinned to the agitation chamber 115 at a second end (e.g., at pin 123, e.g., attached to a post 125 extending from the agitation chamber 115) such that rotation of the first bar 119 causes linear motion of the agitation chamber 115 on the linear slide 113. The agitation chamber 115 can include a skate 126 configured to slide and/or roll on the linear slide 113.

In certain embodiments, the motion converter system 105 can include a belt drive 127 (e.g., a wheel with a belt groove or other suitable belt interface) connected to or forming part of the input shaft 101 such that the input shaft 101 is configured to be belt driven (e.g., as shown in Figs. 4, 5, and 6). The system 100 can include an anchor 129 configured to be fixed to a floor (or other suitable surface, e.g., a wall, a ceiling) and to allow the input shaft 101 to rotate therein (e.g., on a bearing, a race, directly, etc.).

Certain embodiments can convert rotary motion to linear motion such that an agitation chamber slides back and forth on a base and agitates clothes. In certain embodiments, the clothes can go in a bag that is placed inside the chamber. The bag and/or the chamber can have quick disconnects for pumping water in and out. In certain embodiments, the clothes can go directly in a sealed chamber with water and detergent. In certain embodiments, the chamber and/or bag can be attached to a drying system (e.g, as shown in Fig. 3) configured to remove water content from the chamber and/or the bag and/or provide heat thereto. For example, drying can include a partial vacuum system (e.g., utilizing space vacuum), and/or can include water recycling. Any suitable drying system and/or mechanism is contemplated herein.

Embodiments, e.g., as shown in Fig. 1, can agitate clothing by moving the chamber in a linear motion. In gravity environments, the clothing can rub on the base of chamber, for example. In micro-gravity environments the clothing can move throughout the whole chamber, for example. In certain embodiments, exercise machine mechanical energy can be converted into electrical energy to power a motor to drive the system 100. In certain embodiments, e.g., as shown in Fig. 3, the system 100 can be driven by spacecraft, general habitat, station, or vehicle power, or by electrical energy produced by an exercise machine.

However, in certain embodiments, exercise machine mechanical energy can be used to directly drive the laundry system 100 which can be more efficient. In certain embodiments, the system 100 can be configured to be optionally driven by either a direct mechanical drive, or by an electric motor powered by any suitable power source (e.g., as described above).

For example, embodiments can be powered by an exercise bike such as the IS S' CEVIS or FERGO. Certain embodiments can be powered by a motor. Certain embodiments can be powered by a treadmill such as the ISS' COLBERT via a connection to the main motor or a secondary shaft (e.g., which can be mechanical, electromechanical, etc.). Certain embodiments can be powered by a rowing exercise machine (e.g., on the Orion spacecraft) via a connection to the main shaft, or a flywheel, or a resistance pulley (e.g., which can be a shaft attachment, direct pulley and cable attachment for linear motion, electromechanical, etc.). Embodiments can include a shaft adapter that connects to the existing configuration of a treadmill (e.g., which can have a motor with two sprockets joined by a chain similar to a bicycle setup).

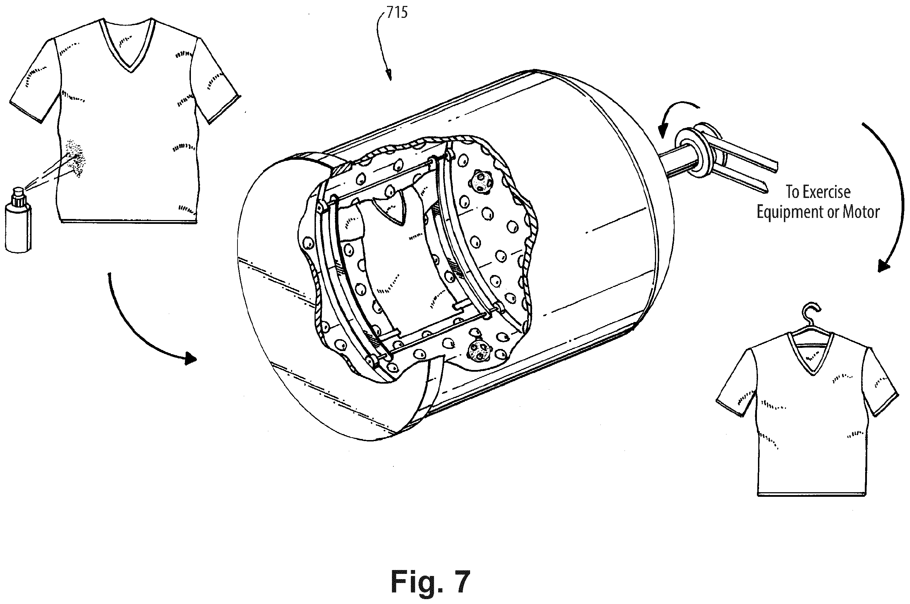

Fig. 7 shows a schematic diagram of an embodiment of a rotational agitation chamber 715 in accordance with this disclosure. The chamber 715 can include a spinning device with detached extrusions (e.g., bumpy balls within the chamber). The chamber 715 can comprise a single drum that spins with input motion (e.g., any suitable motive source disclosed hereinabove). The chamber 715 can include a bumpy inner diameter surface. As shown, an article of clothing can be stretched out and flat, and attached to inner wall of the drum. The article of clothing can be to a frame that allows agitation against an inner surface. The frame can include wheels (e.g., on a track of the inner wall of the drum) and can moves as the drum rotates. One or more bumpy balls can be placed in the chamber 715. In this regard, the article of clothing can be rubbed on both sides, on by the inner diameter of the drum, and one by the bumpy balls. In such a spinning embodiment, the chamber 715 can be directly driven in rotation by exercise equipment or a motor, e.g., via a belt drive, for example.

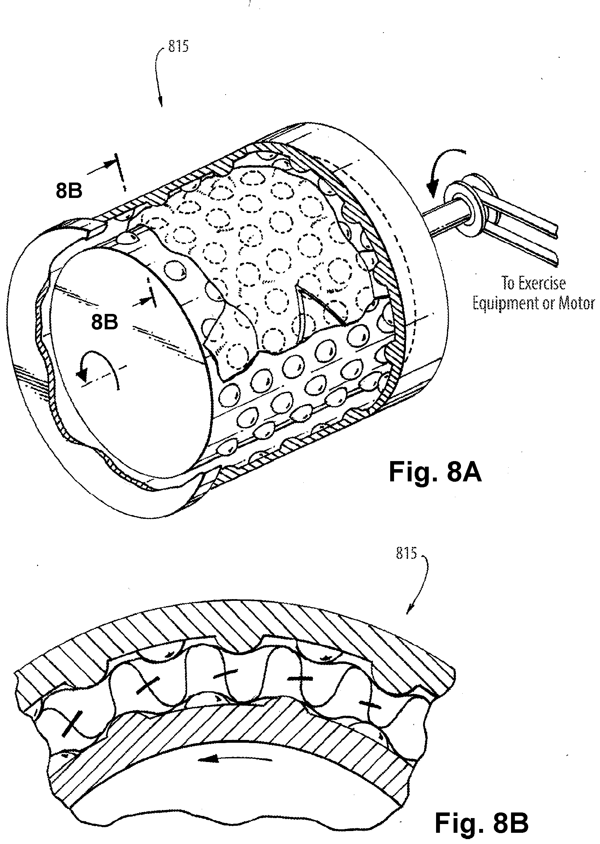

Fig. 8A is a schematic diagram of an embodiment of a rotational agitation chamber 815 in accordance with this disclosure. Fig. 8B is a cross-sectional view of the embodiment of Fig. 8A. The chamber 815 can include a drum within a drum. The articles of clothes can be placed between the inner and outer drum. Each drum can have bumpy surfaces (e.g., the inside of the outer drum, and the outside of the inner drum). In certain embodiments, only the inner drum can be actuated (e.g., rotated) and the outer drum can be stationary. The reverse is contemplated. As shown, the inner walls of the chamber can have agitating extrusions and the inner and outer drum can rotate while the clothing sits in between the two drums. In such a spinning embodiment, the chamber 815 can be directly driven in rotation by exercise equipment or a motor, e.g., via a belt drive, for example.

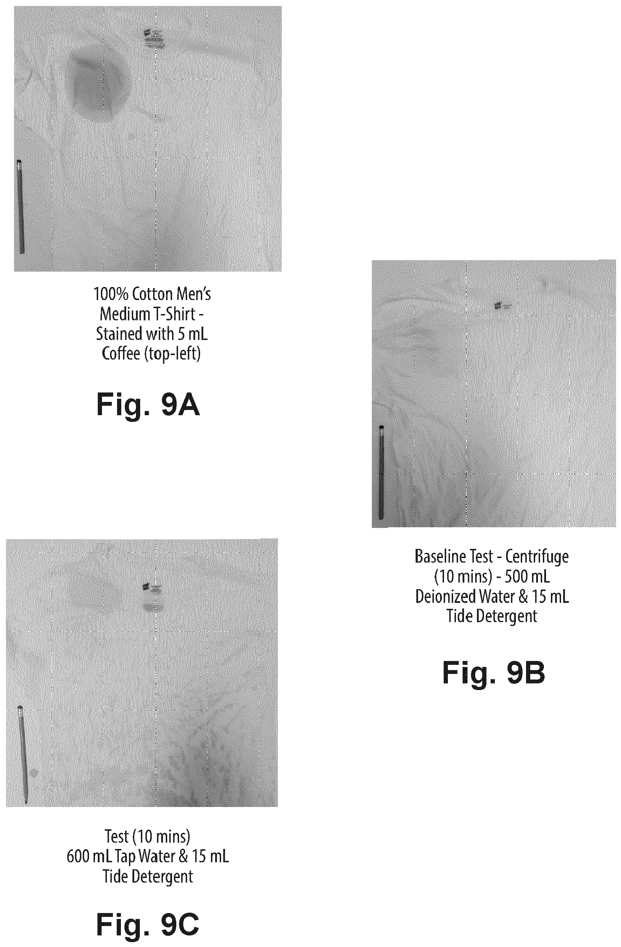

Figs. 9A, 9B, and 9C show experimental results using the embodiment of Fig. 1. Fig. 9A shows a shirt stained with 5 ml of coffee. Fig. 9B shows the results of a baseline test wash using a centrifuge with 500 ml water and 15 ml of detergent. Fig. 9C shows the results of a test using the embodiment of Fig. 1 with 500 ml water and 15 ml detergent. Both tests lasted 10 min each.

In accordance with at least one aspect of this disclosure, a method can include using a spacecraft exercise machine to manually power a spacecraft laundry system. In certain embodiments, using the spacecraft exercise machine can include converting rotational motion from the exercise machine into linear motion, and linearly actuating an agitator. In certain embodiments, the method can include adding water and an item of clothing to the linear agitator (e.g., in a bag or directly into a chamber of the agitator). In certain embodiments, the method can include removing the item of clothing from the linear agitator after agitation. The method can include any other suitable method(s) and/or portion(s) thereof.

In accordance with at least one aspect of this disclosure, a laundry system for a spacecraft can be or include any suitable embodiment of a laundry system disclosed herein, e.g., as described above. A spacecraft can include an exercise machine, for example, and the laundry system can be connected to the exercise machine to be driven by the exercise machine.

Embodiments can reduce upmass and increase astronaut comfort. Embodiments can include a small (e.g., single article of clothing volume), mechanical, low-power, and low-water-usage washing machine that can interface with an exercise bike (or other equipment) to effectively multitask the required exercise and laundry. The washer can be configured to wash at least one medium-size t-shirt in less than 30 minutes, can use less than 500 mL of water per wash, can be configured to recover more than 90% of water usage (e.g., with a water recovery system), can use less than 50 mL of detergent, and can produce a shirt that is at least 80% clean, for example. Embodiments can be used in microgravity environments or in environments that have little-to-no power or water. Embodiments can be used as a washer and/or dryer, and can be primarily powered through exercise equipment. Embodiments can be capable of use in gravity and micro-gravity, for example.

Embodiments of a method for using an embodiment, e.g., as shown in Fig. 1, can include opening the door (5s), loading clothes into drum (15s), closing the door (5s), adding water and detergent (e.g., automated = 5s, manual = 30-60s), starting a wash cycle (e.g., 10-20 min), starting a dry cycle (e.g., vacuum, centrifugal, wrung, bag) (0-10 min), and hanging clothes up to dry completely (e.g., with ECLSS).

Embodiments can weigh less than 10 lbs (4.5 kg), can be able to wash at least 1 medium size cotton t-shirt in less than 30 min, can have low volume (e.g., double EXPRESS rack locker dimensions (21.45 x 21.10 x 17.34 inches (54.5 x 53.6 x 44 cm))), can use minimum power (e.g., less than 500 W), minimum water (e.g., less than 1 L of water per run), and can use minimum detergent (e.g., less than 50 ml). Embodiments can enable water recovery of greater than 90%. Embodiments can provide the ability to produce about an 80% clean cotton t-shirt or higher cleanliness.

Embodiments can be 3D-printed out of glass resin. Embodiments can use a bottle nipple for loading water and premix. Embodiments can be lightweight and durable, e.g., made using aluminum material which emits no outgas and doesn't corrode. For draining water, dirty/soapy water can be put into a spacecraft condensate system. A second rinse cycle liquid can become the liquid solvent for the next wash. Certain embodiments can utilize centrifugal drying.

Automated embodiments can include any suitable computer hardware and/or software. Embodiments can include any suitable computer hardware and/or software module(s) to perform any suitable function (e.g., as disclosed herein).

As will be appreciated by those skilled in the art, aspects of the present disclosure may be embodied as a system, method or computer program product. Accordingly, aspects of this disclosure may take the form of an entirely hardware embodiment, an entirely software embodiment (including firmware, resident software, micro-code, etc.), or an embodiment combining software and hardware aspects, all possibilities of which can be referred to herein as a "circuit," "module," or "system." A "circuit," "module," or "system" can include one or more portions of one or more separate physical hardware and/or software components that can together perform the disclosed function of the "circuit," "module," or "system", or a "circuit," "module," or "system" can be a single self-contained unit (e.g., of hardware and/or software). Furthermore, aspects of this disclosure may take the form of a computer program product embodied in one or more computer readable medium(s) having computer readable program code embodied thereon.

Any combination of one or more computer readable medium(s) may be utilized. The computer readable medium may be a computer readable signal medium or a computer readable storage medium. A computer readable storage medium may be, for example, but not limited to, an electronic, magnetic, optical, electromagnetic, infrared, or semiconductor system, apparatus, or device, or any suitable combination of the foregoing. More specific examples (a non-exhaustive list) of the computer readable storage medium would include the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. In the context of this document, a computer readable storage medium may be any tangible medium that can contain, or store a program for use by or in connection with an instruction execution system, apparatus, or device.

A computer readable signal medium may include a propagated data signal with computer readable program code embodied therein, for example, in baseband or as part of a carrier wave. Such a propagated signal may take any of a variety of forms, including, but not limited to, electro-magnetic, optical, or any suitable combination thereof. A computer readable signal medium may be any computer readable medium that is not a computer readable storage medium and that can communicate, propagate, or transport a program for use by or in connection with an instruction execution system, apparatus, or device.

Program code embodied on a computer readable medium may be transmitted using any appropriate medium, including but not limited to wireless, wireline, optical fiber cable, RF, etc., or any suitable combination of the foregoing.

Computer program code for carrying out operations for aspects of this disclosure may be written in any combination of one or more programming languages, including an object oriented programming language such as Java, Smalltalk, C++ or the like and conventional procedural programming languages, such as the "C" programming language or similar programming languages. The program code may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider).

Aspects of this disclosure may be described above with reference to flowchart illustrations and/or block diagrams of methods, apparatus (systems) and computer program products according to embodiments of this disclosure. It will be understood that each block of any flowchart illustrations and/or block diagrams, and combinations of blocks in any flowchart illustrations and/or block diagrams, can be implemented by computer program instructions. These computer program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in any flowchart and/or block diagram block or blocks.

These computer program instructions may also be stored in a computer readable medium that can direct a computer, other programmable data processing apparatus, or other devices to function in a particular manner, such that the instructions stored in the computer readable medium produce an article of manufacture including instructions which implement the function/act specified in the flowchart and/or block diagram block or blocks.

The computer program instructions may also be loaded onto a computer, other programmable data processing apparatus, or other devices to cause a series of operational steps to be performed on the computer, other programmable apparatus or other devices to produce a computer implemented process such that the instructions which execute on the computer or other programmable apparatus provide processes for implementing the functions/acts specified herein.

Those having ordinary skill in the art understand that any numerical values disclosed herein can be exact values or can be values within a range. Further, any terms of approximation (e.g., "about", "approximately", "around") used in this disclosure can mean the stated value within a range. For example, in certain embodiments, the range can be within (plus or minus) 20%, or within 10%, or within 5%, or within 2%, or within any other suitable percentage or number as appreciated by those having ordinary skill in the art (e.g., for known tolerance limits or error ranges).

The articles "a", "an", and "the" as used herein and in the appended claims are used herein to refer to one or to more than one (i.e., to at least one) of the grammatical object of the article unless the context clearly indicates otherwise. By way of example, "an element" means one element or more than one element.

The phrase "and/or," as used herein in the specification and in the claims, should be understood to mean "either or both" of the elements so conjoined, i.e., elements that are conjunctively present in some cases and disjunctively present in other cases. Multiple elements listed with "and/or" should be construed in the same fashion, i.e., "one or more" of the elements so conjoined. Other elements may optionally be present other than the elements specifically identified by the "and/or" clause, whether related or unrelated to those elements specifically identified. Thus, as a non-limiting example, a reference to "A and/or B", when used in conjunction with open-ended language such as "comprising" can refer, in one embodiment, to A only (optionally including elements other than B); in another embodiment, to B only (optionally including elements other than A); in yet another embodiment, to both A and B (optionally including other elements); etc.

As used herein in the specification and in the claims, "or" should be understood to have the same meaning as "and/or" as defined above. For example, when separating items in a list, "or" or "and/or" shall be interpreted as being inclusive, i.e., the inclusion of at least one, but also including more than one, of a number or list of elements, and, optionally, additional unlisted items. Only terms clearly indicated to the contrary, such as "only one of' or "exactly one of," or, when used in the claims, "consisting of," will refer to the inclusion of exactly one element of a number or list of elements. In general, the term "or" as used herein shall only be interpreted as indicating exclusive alternatives (i.e., "one or the other but not both") when preceded by terms of exclusivity, such as "either," "one of," "only one of," or "exactly one of."

Any suitable combination(s) of any disclosed embodiments and/or any suitable portion(s) thereof are contemplated herein as appreciated by those having ordinary skill in the art in view of this disclosure.

The embodiments of the present disclosure, as described above and shown in the drawings, provide for improvement in the art to which they pertain. While the subject disclosure includes reference to certain embodiments, those skilled in the art will readily appreciate that changes and/or modifications may be made thereto without departing from the scope of the invention as defined by the claims.

## Claims

1. A laundry system, comprising:
an input shaft (101);
an output actuator (103);
a motion converter (105) connected between the input shaft and the output actuator, the motion converter configured to convert rotational motion of the input shaft to linear motion of the output actuator; and
a laundry agitation arrangement (107) connected to the output actuator to be linearly actuated by the output actuator to agitate laundry.

2. The system of claim 1, further comprising an exercise machine coupling (409, 509, 609) connected to or forming part of the input shaft to couple the input shaft to an exercise machine (411, 511, 611) to be rotated by the exercise machine.

3. The system of claim 2, further comprising the exercise machine (411, 511, 611), wherein the exercise machine is a space station exercise machine.

4. The system of any preceding claim, wherein the laundry agitation arrangement includes:
a linear slide (113); and
an agitation chamber (115) operatively connected to the linear slide to be constrained to sliding motion, the agitation chamber configured to receive and retain an item to be agitated.

5. The system of claim 4, wherein the motion converter includes an inline slider crank mechanism.

6. The system of claim 4, wherein the motion converter system includes a first bar (119) fixed to the input shaft to rotate with the input shaft, wherein the output actuator is pinned to the first bar at a first end and pinned to the agitation chamber at a second end such that rotation of the first bar causes linear motion of the agitation chamber on the linear slide.

7. The system of claim 1, wherein the motion converter system includes a belt drive (127) connected to or forming part of the input shaft such that the input shaft is configured to be belt driven.

8. The system of any preceding claim, further comprising an anchor (129) configured to be fixed to a floor and to allow the input shaft to rotate therein.

9. A laundry system as claimed in any preceding claim for a spacecraft.

10. A method, comprising:
using a spacecraft exercise machine (411, 511, 611) to manually power a spacecraft laundry system.

11. The method of claim 10, wherein using the spacecraft exercise machine includes converting rotational motion from the exercise machine into linear motion, and linearly actuating an agitator.

12. The method of claim 11, further comprising adding water and an item of clothing to the linear agitator.

13. The method of claim 12, further comprising removing the item of clothing from the linear agitator after agitation.
